**Europäisches Patentamt**

**European Patent Office**

**Office européen des brevets**

(11) Veröffentlichungsnummer: **0 479 350 A1**

# EUROPÄISCHE PATENTANMELDUNG

(21) Anmeldenummer: **91202263.9**

(22) Anmeldetag: **05.09.91**

(51) Int. Cl.5: **B01D 53/34**

(30) Priorität: **30.10.90 DE 4034498**
**06.09.90 DE 4028300**

(43) Veröffentlichungstag der Anmeldung:
**08.04.92 Patentblatt 92/15**

(84) Benannte Vertragsstaaten:
**AT BE CH DE DK ES FR GB IT LI LU NL SE**

(71) Anmelder: **METALLGESELLSCHAFT**
**Akfiengesellschaft**
**Reuterweg 14**
**W-6000 Frankfurt am Main(DE)**

(72) Erfinder: **Knoche, Ronald, Dr.**

**Hinter dem Rahmen 4**
**W-6380 Bad Homburg(DE)**
Erfinder: **Jury, Egon**
**W.-Borchert-Strasse 16**
**W-6073 Egelsbach(DE)**
Erfinder: **Vicinus, Jürgen**
**Klarastrasse 12**
**W-6000 Frankfurt am Main(DE)**
Erfinder: **Rebitzer, Axel**
**Litzlohe 4**
**W-8530 Pilsach(DE)**
Erfinder: **Omar, Mohamed Hefni, Dr.**
**Röthenbacher-Hauptstrasse 58**
**W-8500 Nürnberg(DE)**

(54) Verfahren zur Abtrennung von Schwermetallen und Dioxinen aus Verbrennungsabgasen.

(57) Es wird ein Verfahren zur Abtrennung von Schwermetallen, insbesondere von Quecksilber und Kadmium, sowie von Dioxinen und Furanen aus Verbrennungsabgasen, insbesondere aus Abgasen von Müllverbrennungsanlagen (1), beschrieben, bei dem die Verbrennungsabgase entstaubt sowie gekühlt werden, bei dem die Abgase dann als Wirbelgas in einen Wirbelschichtreaktor (15) geführt werden, in dem sie bei einer Geschwindigkeit von 2 bis 8 m/sec, einer Temperatur von 80 bis 200°C sowie einer Verweilzeit von 1 bis 10 sec mit einem Adsorptionsmittel reagieren, bei dem die Abgase und das Adsorptionsmittel anschließend voneinander getrennt werden und bei dem das Adsorptionsmittel teilweise in den Wirbelschichtreaktor zurückgeführt sowie ein Teilstrom ausgeschleust wird, während das gereinigte Abgas in die Atmosphäre gelangt.

EP 0 479 350 A1

Die Erfindung bezieht sich auf ein Verfahren zur Abtrennung von Schwermetallen, insbesondere von Quecksilber und Kadmium, sowie von Dioxinen und Furanen aus Verbrennungsabgasen, insbesondere aus Abgasen von Müllverbrennungsanlagen.

Es ist bekannt, daß sich bei Verbrennungsprozessen und insbesondere bei der Abfallverbrennung Dioxine und Furane bilden, die mit dem Filterstaub sowie mit dem Abgas aus der Verbrennungsanlage ausgetragen werden. Mit dem Sammelbegriff "Dioxine und Furane" werden hier die polyhalogenierten Dibenzo-p-Dioxine und die polyhalogenierten Dibenzofurane bezeichnet. Zu den Dioxinen und Furanen gehört eine große Anzahl von Isomeren, von denen einige außerordentlich giftig sind. Wegen der Giftigkeit ist es erforderlich, diese Verbindungen aus dem Filterstaub bzw. dem Abgas zu entfernen oder die Bildung dieser Verbindungen in der Verbrennungsanlage zu vermeiden. Es ist ferner bekannt, daß die Abgase von Verbrennungsanlagen Schwermetalle oder Schwermetallverbindungen enthalten, die giftig sind und daher aus den Abgasen entfernt werden müssen. Beispielsweise entstehen bei der Müllverbrennung Abgase, die insbesondere Quecksilber und Quecksilberverbindungen enthalten.

In der DE-AS 2 327 020 wird darauf hingewiesen, daß staubhaltige Gase in Zyklonen gereinigt werden können, wobei die gereinigten Abgase der Zyklone anschließend noch durch ein bis zur Sättigung mit einem Absorptionsmittel versetztes Schüttgutbett geleitet werden, um Schadgase zu binden. Anschließend wird das Absorptionsmittel durch Rückstromspülung aus dem Schüttgutbett entfernt. Durch den Zyklon wird eine teilweise Abreinigung des Rohgases von festen Staubteilen, insbesondere groben Staubteilen, erreicht, aber das dabei anfallende Abgas enthält immer noch Staub, insbesondere Feinstaub, durch den das im Schüttbett befindliche Absorptionsmittel mindestens teilweise unwirksam gemacht wird, und zwar umsomehr, je länger das Abgas des Zyklons durch das Schüttbett hindurchströmt. Es liegt auf der Hand, daß das Abgas einer Müllverbrennungsanlage, welches in einem oder mehreren Zyklonen entstaubt und anschließend durch ein Schüttbettfilter geleitet wird, das ein Absorptionsmittel enthält, bezüglich der Dioxine und Furane sowie der Schwermetalle nicht in der gebotenen Weise gereinigt wird, da bei einem derartigen Verfahren die Schwermetalle, die Schwermetallverbindungen sowie die Dioxine und Furane nicht mit der erforderlichen Sicherheit quantitativ aus dem Abgas entfernt werden, wie es anzustreben ist.

In der DE-OS 2 327 020 wird ein Verfahren zum Abtrennen von chemischen Schadgasen oder schädlichen Aerosolen aus Staub- oder Rauchgasen mittels Taschen- oder Schlauchfilter und unter Verwendung eines Additivs, das eine physikalische oder chemische Bindung der im zu reinigenden Gas enthaltenen Schadstoffe oder Aerosole bewirkt, vorgeschlagen, bei dem das aus einem ersten Filter austretende, in Bezug auf den Staubgehalt vorgereinigte Gas einem zweiten Taschen- oder Schlauchfilter zugeführt wird, dem in Abhängigkeit vom Gasdurchsatz stündlich eine bestimmte Menge des Additivs zugesetzt wird, daß das Additiv mit gebundenen Schadgasen oder Aerosolen periodisch durch Abreinigung von den Filterflächen gelöst und den Filterflächen durch das ankommende vorgereinigte Gas wieder zugeführt wird, bis eine Additivmenge im Filter erreicht ist, die der 100- bis 1000-fachen Menge der stündlich zugeführten Additivmenge entspricht, und daß dem zweiten Filter nach Erreichen eines Gleichgewichtszustands stündlich eine absinkende Additivmenge entsprechend der stündlich zuzusetzenden Additivmenge entnommen wird. Auch ein derartiges Verfahren, das die Filtration und Adsorption miteinander verbindet, ist nicht geeignet, die zuverlässige und quantitative Abtrennung der Schwermetalle und der Dioxine und Furane aus den Verbrennungsabgasen zu garantieren. Außerdem bewirkt die im Filter vorhandene große Additivmenge einen signifikanten Druckverlust.

Der Erfindung liegt daher die Aufgabe zugrunde, ein Verfahren zur Abtrennung von Schwermetallen sowie von Dioxinen und Furanen zu schaffen, das eine weitgehend quantitative Abtrennung dieser Schadstoffe gestattet, das betriebssicher arbeitet und das kostengünstig durchgeführt werden kann.

Die der Erfindung zugrundeliegende Aufgabe wird dadurch gelöst, daß die Verbrennungsabgase entstaubt und gekühlt werden, daß die Abgase dann als Wirbelgas in einen Wirbelschichtreaktor geführt werden, in dem sie bei einer Geschwindigkeit von 2 bis 8 m/sec, einer Temperatur von 80 bis 200 °C sowie einer Verweilzeit von 1 bis 10 sec mit einem Adsorptionsmittel reagieren, daß die Abgase und das Adsorptionsmittel anschließend voneinander getrennt werden und daß das Adsorptionsmittel teilweise in den Wirbelschichtreaktor zurückgeführt sowie teilweise ausgeschleust wird, während das gereinigte Abgas in die Atmosphäre gelangt. Die nach dem erfindungsgemäßen Verfahren im ersten Schritt vorgesehene Abgasentstaubung erfolgt unter Berücksichtigung der Abgastemperatur nach an sich bekannten Verfahren in einem oder mehreren Elektrofiltern oder Fliehkraftentstaubern oder Gewebefiltern, insbesondere in einem oder mehreren Zyklonen. Die Abkühlung des entstaubten Abgases erfolgt ebenfalls nach an sich bekannten Verfahren in einem Abhitzekessel und/oder durch Verdampfungskühlung. Der aus dem Prozeß ausgeschleuste Teilstrom des Adsorptionsmittels wird als Sondermüll deponiert, oder er wird einer Glasschmelze zugegeben und zu Glas-Granulaten verarbeitet. In besonderen Fällen kann das Adsorptionsmittel auch thermisch behandelt werden. Aus dem Prozeß werden pro Zeiteinheit 1 bis 20 Gew.% des zugeführten Adsorptionsmittels ausgeschleust. Das erfindungsgemäße Verfahren arbeitet mit einem Adsorptionsmittel, dessen Teilchendurchmesser 0,001 bis 5 mm beträgt. Mit dem erfindungsgemäßen Verfahren wird eine nahezu quantitative Abtrennung der Schwermetalle, Schwermetallverbindungen sowie der Dioxine und Furane erreicht, so daß die im gereinigten Abgas enthaltenen Schadstoffmengen weit unterhalb der zulässigen Grenzwerte liegen. Im einzelnen wurden nach einem Dauerbetrieb von 50 Tagen bei einer Müllverbrennungsanlage folgende Restgehalte im gereinigten Abgas ermittelt: Hg (Gesamtgehalt) < 0,01 mg/Nm$^3$ Reingas; polychlorierte Dibenzo-p-Dioxine und Dibenzofurane, berechnet als TCDD-Äquivalente (nach Bundesgesundheitsamt) < 0,01 ng/Nm$^3$ Reingas.

Nach der Erfindung ist es besonders vorteilhaft, wenn der Wirbelschichtreaktor mit zirkulierender Wirbelschicht arbeitet und als Zirkulationssystem gestaltet ist, das aus einem Reaktor, einem Feststoff-Abscheider und einer Feststoff-Rückführleitung besteht. In der zirkulierenden Wirbelschicht beträgt die Gasgeschwindigkeit 4 bis 6 m/sec.

Das nach der Erfindung angewendete Prinzip der zirkulierenden Wirbelschicht zeichnet sich dadurch aus, daß - im Unterschied zur "klassischen" Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und darüber befindlichem Staubraum ist nicht existent; jedoch nimmt innerhalb des Reaktors die Feststoffkonzentration von unten nach oben ständig ab.

Bei Definition der Betriebsbedingungen über die Kennzahlen von Froude und Archimedes ergeben sich die Bereiche:

$$0,1 \leq 3/4 \cdot \frac{u^2}{g \cdot d_k} \cdot \frac{\rho_g}{\rho_k - \rho_g} \leq 10$$

mit

$$\frac{u^2}{g \cdot d_k} = Fr^2$$

bzw.

$$0,01 \leq Ar \leq 100 ,$$

wobei

$$Ar = \frac{d_k^3 \cdot g (\rho_k - \rho_g)}{\rho_g \cdot \gamma^2}$$

ist.

Es bedeuten:

- $u$      die relative Gasgeschwindigkeit in m/sec
- $Ar$      die Archimedes-Zahl
- $Fr$      die Froude-Zahl
- $\rho_g$      die Dichte des Gases in kg/m$^3$
- $\rho_k$      die Dichte des Feststoffteilchens in kg/m$^3$
- $d_k$      den Durchmesser des kugelförmigen Teilchens in m
- $\gamma$      die kinematische Zähigkeit in m$^2$/sec
- $g$      die Gravitationskonstante in m/sec$^2$

Nach der Erfindung ist ferner vorgesehen, daß als Adsorptionsmittel ein Gemisch aus 1 bis 40 Gew.%

Aktivkohle, vorzugsweise Herdofenkoks, und Rest Additiv verwendet wird und daß das Adsorptionsmittel im Wirbelschichtreaktor in einer Konzentration von 0,5 bis 50 kg/m³ vorhanden ist. Durch diese Maßnahme wird erreicht, daß für die Beseitigung der Schadstoffe durch physikalische und chemische Bindung ein ausreichendes Angebot des Adsorptionsmittels zur Verfügung steht. Ein Vorteil des erfindungsgemäßen Verfahrens besteht darin, daß es besonders wirtschaftlich arbeitet, da der Aktivkohle-Verbrauch gering ist. Während ein mit Aktivkohle betriebener Wander- oder Festbettadsorber 0,5 g Kohle pro Nm³ Abgas und ein Flugstromadsorber 0,25 g Aktivkohle pro Nm³ Abgas verbraucht, arbeitet das erfindungsgemäße Verfahren mit einem Verbrauch von 0,1 bis 0,15 g Aktivkohle pro Nm³ Abgas. Die Konzentration von 0,5 bis 50 kg/m³ ist der Mittelwert aller örtlich im Reaktor vorhandenen Feststoffkonzentrationen. Die örtliche Feststoffkonzentration nimmt im Reaktor von unten nach oben ab.

Nach der Erfindung ist ferner vorgesehen, daß als Additiv Flugasche, $CaCO_3$, CaO, $Ca(OH)_2$, Bentonit, Kaolin, $SiO_2$, Rückstände aus der trockenen oder quasi-trockenen Rauchgasreinigung oder Mischungen aus diesen Stoffen verwendet werden. Es hat sich gezeigt, daß das Additiv, welches im Adsorptionsmittel in einer Menge von 99 bis 60 Gew.% enthalten ist, als Wärmespeicher zur Vermeidung der Selbstentzündung der Aktivkohle absolut zuverlässig wirkt. Einige der als Additiv verwendeten Stoffe wirken darüber hinaus für die Schadstoffe HCl, HF und $SO_2$ als Reaktionspartner.

Nach der Erfindung ist es besonders vorteilhaft, wenn die Abgase während der Kühlung mit Wasser, mit wässrigen Lösungen von NaOH, $Na_2CO_3$, $NaHCO_3$ oder $Ca(OH)_2$ oder mit einer wässrigen Suspension von $Ca(OH)_2$ oder $CaCO_3$ zur Reaktion gebracht werden. Dieser Verfahrensschritt wird in der Weise realisiert, daß zumindest ein Teil der Kühlarbeit durch Verdampfungskühlung geleistet wird, wobei als Kühlmedium

a) entweder eine wässrige Suspension von $Ca(OH)_2$ oder $CaCO_3$ in einer Sprühabsorptionsstufe oder
b) Wasser bzw. wässrige alkalische Lösungen in einer oder mehreren Waschstufen

zur Anwendung kommen. Bei der Kühlung in einem Wäscher ist es allerdings erforderlich, daß die gekühlten und gewaschenen Abgase durch erneutes Aufheizen mit Dampf oder Fremdwärme mit dem Rohgas auf die Betriebstemperatur des Wirbelschichtreaktors gebracht werden.

In weiterer Ausgestaltung der Erfindung ist vorgesehen, daß der Wirbelschichtreaktor bei einer Temperatur von 100 bis 140 °C sowie bei Normaldruck betrieben wird, denn bei diesen Bedingungen ist eine nahezu quantitative Entfernung der Schwermetalle, Schwermetallverbindungen, der Dioxine und Furane sowie auch der noch vorhandenen Schadstoffe HCl, HF und $SO_2$ möglich, ohne daß die Gefahr einer Kondensatbildung besteht.

Nach der Erfindung erfolgt die Abtrennung des Adsorptionsmittels vom Abgas besonders vorteilhaft in einem Gewebefilter. Das Gewebefilter hat den Vorteil, daß im Filterkuchen eine nochmalige adsorptive Reinigung des Abgases erfolgt.

Schließlich ist in weiterer Ausgestaltung der Erfindung vorgesehen, daß vor dem Gewebefilter ein Fliehkraftabscheider, vorzugsweise ein Zyklon, angeordnet ist. Das im Fliehkraftabscheider abgeschiedene Adsorptionsmittel wird ganz oder teilweise in den Wirbelschichtreaktor zurückgeführt. Hierdurch wird insbesondere bei Feststoffkonzentrationen von 5 bis 50 kg/m³ eine Entlastung des Gewebefilters und eine bessere Ausnutzung des Adsorptionsmittels erreicht.

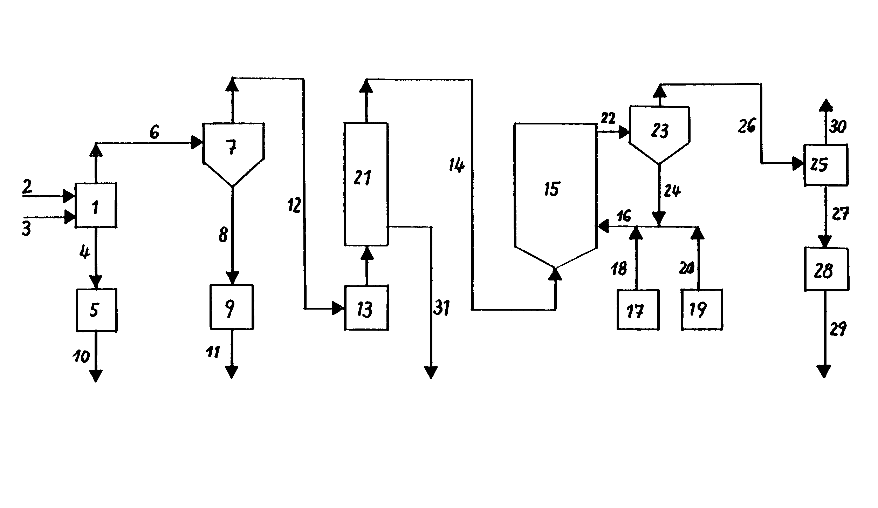

Der Gegenstand der Erfindung wird nachfolgend anhand der Zeichnung sowie eines Ausführungsbeispiels näher erläutert.

Einer Müllverbrennungsanlage (1) werden über die Leitung (2) Abfallstoffe und über die Leitung (3) Verbrennungsluft zugeführt. In der Müllverbrennungsanlage (1) werden die Abfallstoffe bei einer Temperatur von 800 bis 1000 °C verbrannt, und die Verbrennungsrückstände werden über die Leitung (4) in den Aschebunker (5) ausgetragen. Die bei der Verbrennung entstehenden Abgase gelangen über den Abgaskanal (6) in den mehrstufigen Zyklon (7), wo eine teilweise Entstaubung erfolgt. Die im Zyklon (7) abgeschiedene Flugasche gelangt über die Leitung (8) in den Vorratsbunker (9). Die Flugasche wird über die Leitung (11), und die Verbrennungsrückstände werden über die Leitung (10) abgegeben. Wenn dem Abgas bereits im Bereich des Abgaskanals Wärme zur Erzeugung von Hochdruck-Dampf entzogen wird, und das Abgas sich dabei auf 300 bis 400 °C abkühlt, kann der Zyklon durch ein Elektrofilter ersetzt werden.

Das teilentstaubte Abgas verläßt den Zyklon (7) über die Leitung (12) und gelangt zunächst in den Abhitzekessel (13), in dem das Abgas zur Dampferzeugung genutzt und auf eine Temperatur von ca. 300 °C abgekühlt wird. Anschließend wird das Abgas im Sprühabsorber (21) mit einer wässrigen Suspension von $Ca(OH)_2$ behandelt, wobei das Abgas sich auf ca. 140 °C abkühlt. Im Sprühabsorber (21) fällt ein trockener Rückstand an, der über die Leitung (31) ausgeschleust wird und im wesentlichen aus $CaCl_2$ und $CaSO_3$ besteht. Der Taupunkt wird bei der Kühlung nicht unterschritten, so daß es nicht zur Kondensatbildung kommen kann. Der Sprühabsorber kann auch durch einen mehrstufigen Wäscher ersetzt werden.

Das teilentstaubte und gekühlte Abgas wird dem Wirbelschichtreaktor (15) über die Leitung (14) als

4

Wirbelgas zugeführt und fluidisiert dort das Adsorptionsmittel, welches über die Leitung (16) in den Wirbelschichtreaktor (15) gelangt. Das Adsorptionsmittel besteht aus 30 % Herdofenkoks und 70 % Ca(OH)$_2$. Der Herdofenkoks wird dem Vorratsgefäß (17) entnommen und gelangt über die Leitung (18) in die Leitung (16). Das im Vorratsgefäß (19) befindliche Ca(OH)$_2$ wird der Leitung (16) über die Leitung (20) zugeführt. Alle Feststoffe werden pneumatisch mit Reingas als Fördermittel gefördert und in Form einer Flugstromwolke in den Wirbelschichtreaktor (15) eingebracht. Der nach dem Prinzip der zirkulierenden Wirbelschicht arbeitende Wirbelschichtreaktor (15) wird mit einer Gasgeschwindigkeit von ca. 5 m/sec betrieben, und im Wirbelschichtreaktor (15) herrscht eine mittlere Feststoffkonzentration von ca. 10 kg/m$^3$. Da der Wirbelschichtreaktor (15) eine Höhe von 20 m aufweist, beträgt die durchschnittliche Verweilzeit des Adsorptionsmittels im Wirbelschichtreaktor (15) 4 sec.

Das Abgas verläßt den Wirbelschichtreaktor (15) über die Leitung (22) und gelangt in den Zyklon (23), wo das aus dem Wirbelschichtreaktor (15) ausgetragene Adsorptionsmittel teilweise abgeschieden und über die Leitungen (24) und (16) in den Wirbelschichtreaktor (15) zurückgeführt wird. Das mit dem restlichen ausgetragenen Adsorptionsmittel beladene Abgas wird dem Gewebefilter (25) über die Leitung (26) zugeführt. Dort werden die einzelnen Filterelemente von außen nach innen vom Abgas durchströmt, und an der Außenfläche der Filterelemente baut sich ein Filterkuchen auf, der periodisch durch Rückspülung abgereinigt wird. Zur Abreinigung wird zweckmäßigerweise Reingas verwendet. Das Reingas verläßt das Gewebefilter über die Leitung (30), während das im Gewebefilter in agglomerierter Form abgeschiedene Adsorptionsmittel aus dem Staubbunker des Gewebefilters (25) über die Leitung (27) in das Vorratsgefäß (28) gelangt. Das verbrauchte Adsorptionsmittel wird dem Vorratsgefäß (28) über die Leitung (29) entnommen und auf eine Deponie für Sondermüll abgelagert.

Mit dem erfindungsgemäßen, vorstehend beschriebenen Verfahren wurden folgende Ergebnisse erzielt:

Staubgehalt des Verbrennungsabgases in Leitung (6) = 10 g/Nm$^3$

Staubgehalt im Abgas in Leitung (12) = 100 mg/Nm$^3$

Staubgehalt des Reingases in Leitung (30) = 5 mg/Nm$^3$

Dioxin- und Hg-Gehalt des Reingases in Leitung (30) = Hg < 0,01 mg/Nm$^3$; TCDD-Äquivalente (nach Bundesgesundheitsamt) < 0,01 ng/Nm$^3$

Aktivkohleverbrauch = 10 kg/100 000 Nm$^3$

Ca(OH)$_2$-Verbrauch = 20 kg/100 000 Nm$^3$

**Patentansprüche**

1. Verfahren zur Abtrennung von Schwermetallen, insbesondere von Quecksilber und Kadmium, sowie von Dioxinen und Furanen aus Verbrennungsabgasen, insbesondere aus Abgasen von Müllverbrennungsanlagen, dadurch gekennzeichnet, daß die Verbrennungsabgase entstaubt und gekühlt werden, daß die Abgase dann als Wirbelgas in einen Wirbelschichtreaktor geführt werden, in dem sie bei einer Geschwindigkeit von 2 bis 8 m/sec, einer Temperatur von 80 bis 200°C sowie einer Verweilzeit von 1 bis 10 sec mit einem Adsorptionsmittel reagieren, daß die Abgase und das Adsorptionsmittel anschließend voneinander getrennt werden und daß das Adsorptionsmittel teilweise in den Wirbelschichtreaktor zurückgeführt sowie teilweise augeschleust wird, während das gereinigte Abgas in die Atmosphäre gelangt.

2. Verfahren nach Anspruch 1, dadurch gekennzeichnet, daß der Wirbelschichtreaktor mit zirkulierender Wirbelschicht arbeitet und als Zirkulationssystem gestaltet ist, das aus einem Reaktor, einem Feststoff-Abscheider und einer Feststoff-Rückführleitung besteht.

3. Verfahren nach den Ansprüchen 1 bis 2, dadurch gekennzeichnet, daß als Adsorptionsmittel ein Gemisch aus 1 bis 40 Gew.% Aktivkohle, vorzugsweise Herdofenkoks, und Rest Additiv verwendet wird und daß das Adsorptionsmittel im Wirbelschichtreaktor in einer Konzentration von 0,5 bis 50 kg/m$^3$ vorhanden ist.

4. Verfahren nach den Ansprüchen 1 bis 3, dadurch gekennzeichnet, daß als Additiv Flugasche, CaCO$_3$, CaO, Ca(OH)$_2$, Bentonit, Kaolin, SiO$_2$, Rückstände aus der trockenen oder quasi-trockenen Rauchgasreinigung oder Mischungen aus diesen Stoffen verwendet werden.

5. Verfahren nach den Ansprüchen 1 bis 4, dadurch gekennzeichnet, daß die Abgase während der Kühlung mit Wasser, mit wässrigen Lösungen von NaOH, Na$_2$CO$_3$, NaHCO$_3$ oder Ca(OH)$_2$ oder mit einer wässrigen Suspension von Ca(OH)$_2$ oder CaCO$_3$ zur Reaktion gebracht werden.

6. Verfahren nach den Ansprüchen 1 bis 5, dadurch gekennzeichnet, daß der Wirbelschichtreaktor bei einer Temperatur von 100 bis 140°C sowie bei Normaldruck betrieben wird.

7. Verfahren nach den Ansprüchen 1 bis 6, dadurch gekennzeichnet, daß die Abtrennung des Adsorptionsmittels vom Abgas in einem Gewebefilter erfolgt.

8. Verfahren nach den Ansprüchen 1 bis 7, dadurch gekennzeichnet, daß vor dem Gewebefilter ein Fliehkraftabscheider, vorzugsweise ein Zyklon, angeordnet ist.

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | MüLL UND ABFALL Band 23, Nr. 4, April 1991, Seiten 229-235, Berlin, DE; J. VICINUS et al.: "Abscheidung von Dioxinen, Furanen und Schwermetallen in einer Gasreinigung" * Vollständiges Dokument * | 1-7 | B 01 D 53/34 |
| A,D | DE-A-2 327 020 (A. MARGRAF) * Ansprüche 1-3 * | 1 | |
| A | EP-A-0 228 111 (METALLGESELLSCHAFT AG) * Ansprüche 1-5; Spalte 4, Zeilen 1-15 * | 1,2,4 | |
| A | EP-A-0 253 563 (A/S NIRO ATOMIZER) * Ansprüche 1-10 * | 1 | |

**RECHERCHIERTE SACHGEBIETE (Int. Cl.5)**

B 01 D 53/00

Der vorliegende Recherchenbericht wurde für alle Patentansprüche erstellt

| Recherchenort | Abschlußdatum der Recherche | Prüfer |
|---|---|---|
| Berlin | 03 Dezember 91 | BERTRAM H E H |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument